(19) **Europäisches Patentamt**
**European Patent Office**
**Office européen des brevets**

(11) **EP 2 293 005 B1**

(12) # EUROPÄISCHE PATENTSCHRIFT

(45) Veröffentlichungstag und Bekanntmachung des Hinweises auf die Patenterteilung:
**06.04.2016 Patentblatt 2016/14**

(51) Int Cl.:
*F28F 27/00* (2006.01)  *F28D 7/00* (2006.01)
*F28D 7/02* (2006.01)  *F28D 21/00* (2006.01)
*F24H 9/20* (2006.01)  *G01F 1/68* (2006.01)
*F24H 1/43* (2006.01)  *G01F 1/684* (2006.01)

(21) Anmeldenummer: **10007088.7**

(22) Anmeldetag: **09.07.2010**

(54) **Durchströmungsüberwachung eines Wärmetauschers**

Flow monitoring of a heat exchanger

Surveillance d'écoulement d'un échangeur thermique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.07.2009 AT 11292009**

(43) Veröffentlichungstag der Anmeldung:
**09.03.2011 Patentblatt 2011/10**

(73) Patentinhaber: **Vaillant GmbH**
**42859 Remscheid (DE)**

(72) Erfinder:
• **Engel, Mira**
**42929 Wermelskirchen (DE)**

• **Ernst, Thomas**
**42853 Remscheid (DE)**
• **Marais, Edouard**
**50825 Köln (DE)**
• **Menser, Sascha**
**42369 Wuppertal (DE)**

(74) Vertreter: **Hocker, Thomas**
**Vaillant GmbH**
**Berghauser Strasse 40**
**42859 Remscheid (DE)**

(56) Entgegenhaltungen:
**WO-A1-2006/026833  WO-A1-2006/130929**

**Beschreibung**

Die Erfindung bezieht sich auf ein Verfahren und eine Vorrichtung zur Durchströmungsüberwachung eines Wärmetauschers mit parallel durchströmten Strömungswegen. Ein Verfahren bzw. eine Vorrichtung nach dem Oberbegriff des Anspruchs 1 bzw. 3 sind aus WO 2006/130929 A1 bekannt.

In Wärmetauschern wird Wärme von einem Medium auf ein anderes übertragen.

Aus WO 2006/130929 A1 ist eine Heizungsanlage bekannt, bei welcher ein Wärmetauscher einen Warmwasserspeicher mit Wasserumlauf durchströmt. Sowohl stromauf des Warmwasserspeichers, als auch stromauf des Wärmetauschers sind jeweils ein Temperatursensor angebracht, um festzustellen, wenn kein Fluidstrom durch mindestens einen Strömungsweg erfolgt. In diesem Fall wird die Wärmequelle abgestellt, um eine Überhitzung zu vermeiden.

Es kommen häufig auch Wärmetauscher mit parallel durchströmten Strömungswegen zum Einsatz, um die Wärmeübertragerfläche zu erhöhen, ohne dabei den Strömungswiderstand übermäßig ansteigen zu lassen, wie es bei einer reinen Serienschaltung der Fall wäre.

Hierbei besteht das Problem, dass ein durchströmter Strömungsweg sich im Laufe der Zeit zusetzen könnte, so dass er nur noch mangelhaft durchströmt wird. Ursachen hierfür können beispielsweise eine Verkalkung oder auch Schmutzablagerungen sein. Ist ein Strömungsweg mangelnd durchströmt, so kann die Wärme nicht ausreichend abgeführt werden. Es kommt zu Kavitationserscheinungen. Dies wird jedoch gemäß dem Stand der Technik nicht detektiert, da ein Durchfluss durch den oder die anderen Strömungswege erfolgt.

Der Erfindung liegt die Aufgabe zugrunde, die Durchströmung paralleler Strömungswege zu überwachen.

Dies wird gemäß den Merkmalen des unabhängigen Anspruchs 1 dadurch gelöst, dass bei einem Wärmetauscher mit parallelen Strömungswegen und einer Sammelleitung die Temperatur in den parallelen Strömungswegen als auch in der Sammelleitung erfasst werden, um hieraus den Anteil der Durchströmung durch die jeweiligen Kanäle zu errechnen.

Vorteilhafte Ausgestaltungen der Erfindung ergeben sich durch die Merkmale der abhängigen Ansprüche.

So wird ein Sollbereich für das Verhältnis der Durchströmungen festgelegt. Befindet sich der Messwert innerhalb des Grenzbereichs des Sollbereichs, so ist dies ein Indiz für eine Veränderung im System. Entsprechend wird ein Warnhinweis ausgegeben. Verlässt der gemessene bzw. errechnete Wert den Sollbereich, so wird die Vorrichtung abgeschaltet, um eine Beschädigung des Wärmetauschers zu vermeiden.

Der unabhängige Vorrichtungsanspruch 3 schützt eine Heizungsanlage mit einem Wärmetauscher, der zur Durchführung des erfindungsgemäßen Verfahrens geeignet ist.

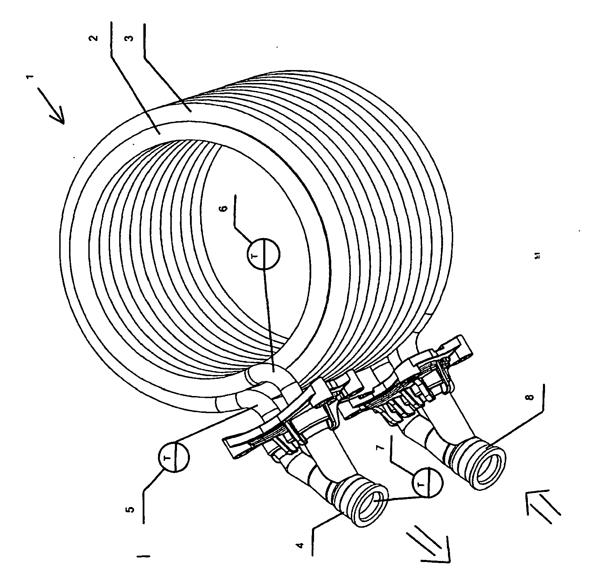

Die Erfindung wird nun anhand der Figur detailliert erläutert.

Die Figur zeigt einen Wärmetauscher 1 mit zwei parallelen Fluidwegen 2, 3. Die parallelen Fluidwege 2, 3 münden einerseits in eine Sammelleitung 4 und andererseits in eine Rücklaufleitung 8. In der Sammelleitung 4 befindet sich ein Temperatursensor 7; in den Fluidwegen 2, 3 befinden sich Temperatursensoren 5, 6 nahe der Sammelleitung 4.

Im Betrieb strömt ein Fluid durch die Rücklaufleitung 8 in die zwei parallelen Fluidwege 2, 3, wo es jeweils von einer Wärmequelle erwärmt wird. Das erwärmte Fluid in den zwei Fluidwegen 2, 3 strömt an den Temperatursensoren 5, 6 vorbei in die Sammelleitung 4, in der sich der weitere Temperatursensor 7 befindet.

In dem Wärmetauscher 1 wurde sodann das mit einer bestimmten Temperatur in den Wärmetauscher 1 einströmende Fluid um eine Temperatur $\Delta T$ insgesamt erwärmt. Die Temperaturdifferenz $\Delta T$ ergibt sich aus der Differenz zwischen der Rücklauftemperatur, welche in der Rücklaufleitung 8 herrscht, und der Temperatur, welche mittels des Temperatursensors 7 gemessen wird. Diese Wärme setzt sich zusammen aus der Wärme, welche in den beiden Fluidwegen 2, 3 auf die beiden Fluidteilströme übertragen wird. Der Fluidstrom des einen Fluidwegs 2 wird um eine Temperatur $\Delta T_1$ erwärmt, das Fluid des zweiten Strömungswegs 3 um eine Temperatur $\Delta T_2$. $\Delta T_1$ ist die Temperaturdifferenz zwischen der Temperatur in der Rücklaufleitung und der Temperatur in dem ersten Fluidweg 2 kurz vor der Sammelleitung 4. Es gilt

$$\dot{Q} = c_p \cdot \rho \cdot \dot{V} \cdot \Delta T = c_p \cdot \rho \cdot \left( \dot{V}_1 \cdot \Delta T_1 + \dot{V}_2 \cdot \Delta T_2 \right)$$

$$\dot{V}_2 = \dot{V} \cdot \frac{\dfrac{\Delta T}{\Delta T_1} - 1}{\dfrac{\Delta T_2}{\Delta T_1} - 1}$$

Somit lässt sich der Volumenstrom in jedem Fluidweg 2, 3 als Funktion des Gesamtvolumenstroms errechnen.

Es ist wahrscheinlich, dass das Fluid sich im inneren Fluidweg 2 mehr erwärmt als das Fluid im äußeren Fluidweg 3. Dementsprechend ist die Temperatur am Ende des inneren Fluidwegs 2 größer als die Temperatur am Ende des zweiten Fluidwegs 3. In der Sammelleitung 4 vermischen sich diese zwei Volumenströme, so dass es zu einer Mischtemperatur kommt. Der Fluidstrom des inneren Fluidwegs 2 gibt dabei soviel Wärme ab, wie das Fluid des äußeren Fluidwegs 3 aufnimmt. Es gilt

$$\dot{\Delta Q} = c_p \cdot \rho \cdot \dot{V}_1 \cdot \left( T_1 - T_{Vorlauf} \right) = c_p \cdot \rho \cdot \dot{V}_2 \cdot \left( T_{Vorlauf} - T_2 \right)$$

$$\dot{V}_2 = \dot{V}_1 \cdot \frac{T_1 - T_{Vorlauf}}{T_{Vorlauf} - T_2}$$

Hieraus lässt sich das Volumenstromverhältnis der beiden Teilvolumenströme zueinander errechnen.

Im neuwertigen Zustand wird sich ein bestimmtes Volumenstromverhältnis zwischen den zwei Fluidwegen 2, 3 einstellen. Da es bei der Herstellung zu Fertigungstoleranzen kommen kann und nicht jede Verschmutzung der Fluidwege 2, 3 direkt zu einer Fehlfunktion des Wärmetauschers führt, wird ein Sollbereich für das Verhältnis der Volumenströme vorgegeben. Kommt es zu übermäßigen Ablagerungen, so nimmt ein Volumenstrom der beiden Fluidwege 2, 3 überverhältnismäßig weit ab. Befindet sich das errechnete Verhältnis im Grenzbereich des Sollbereichs, so ist dies ein Indiz dafür, dass sich kontinuierlich das Verhältnis verändert und ein unerwünschter Zustand bald bevorsteht. Dementsprechend kann eine Vorrichtung, mittels der die Temperaturen ausgewertet werden, einen entsprechenden Warnhinweis ausgeben. Befindet sich der errechnete Volumenstromanteil außerhalb des vorgegebenen Sollbereichs, so wird die Vorrichtung, in der sich der Wärmetauscher 1 befindet, abgeschaltet, um eine Beschädigung zu vermeiden.

Dieses Verfahren lässt sich auch auf Wärmetauscher mit mehr als zwei parallel durchströmten Strömungswegen anwenden. Es lässt sich auch nicht nur auf die im Ausführungsbeispiel dargestellten wendelförmigen ineinander liegenden Wärmetauschern anwenden, sondern auch auf andere Wärmetauscherkonstellationen.

**Patentansprüche**

1. Verfahren zur Durchströmungsüberwachung eines Wärmetauschers (1), vorzugsweise einer Heizungsanlage, mit mindestens 2 parallel durchströmten Fluidwegen (2, 3) sowie und einer Sammelleitung (4), in welche die mindestens 2 parallel durchströmten Fluidwege (2, 3) münden, wobei in der Sammelleitung (4) ein Temperatursensor angeordnet ist **dadurch gekennzeichnet, dass** auch in jedem der parallelen Fluidwege (2, 3) jeweils ein Temperatursensor (5, 6, 7) angeordnet ist und aus den mittels der Temperatursensoren (5, 6, 7) gemessenen Temperaturen der Anteil des Durchflusses durch mindestens einen Fluidweg (2, 3) errechnet wird.

2. Verfahren zur Durchströmungsüberwachung nach Anspruch 1, **dadurch gekennzeichnet, dass** ein Sollbereich für den Anteil des Durchflusses der Fluidwege hinterlegt sind und bei einem errechneten Anteil, der sich im Grenzbereich des Sollbereichs befindet, eine Warnung ausgegeben wird und / oder in dem Fall, in dem der Sollbereich verlassen wird, eine Abschaltung der Vorrichtung, in der sich der Wärmetauscher (1) befindet, erfolgt.

3. Heizungsanlage mit einem Wärmetauscher (1) mit mindestens 2 parallel durchströmten Fluidwegen (2, 3) sowie einer Sammelleitung (4), in welche die mindestens 2 parallel durchströmten Fluidwege (2, 3) münden, wobei in der Sammelleitung (4) ein Temperatursensor angeordnet ist **dadurch gekennzeichnet, dass** auch in jedem der parallelen Fluidwege (2, 3) jeweils ein Temperatursensor (5, 6, 7) angeordnet ist, damit aus den mittels der Temperatursensoren (5, 6, 7) gemessenen Temperaturen der Anteil des Durchflusses durch mindestens einen Fluidweg (2, 3) errechnet wird.

4. Heizungsanlage mit einem Wärmetauscher (1) nach Anspruch 3, **dadurch gekennzeichnet, dass** die parallel durchströmten Fluidwege (2, 3) in Form von koaxialen Wendeln gestaltet sind.

## Claims

1. Method for the flow monitoring of a heat exchanger (1), preferably a heating system, with at least two fluid paths (2, 3) flowed through in parallel and a collecting pipe (4), into which the at least two parallel flowed through fluid paths (2, 3) open, wherein a temperature sensor is arranged in the collecting pipe (4), **characterised in that** in each of the parallel fluid paths (2, 3) respectively a temperature sensor (5, 6, 7) is arranged and from the temperatures measured by means of the temperature sensors (5, 6, 7) the amount of throughflow through at least one fluid path (2, 3) is calculated.

2. Method for flow monitoring according to claim 1, **characterised in that** a specified range is saved for the proportion of the throughflow of the fluid paths and at a calculated proportion which falls within the boundary area of the specified range a warning is emitted and/or if the specified range is departed from the device in which the heat exchanger (1) is located is switched off.

3. Heating system with a heat exchanger (1) comprising at least two fluid paths (2, 3) flowed through in parallel and a collecting pipe (4), into which the at least two fluid paths (2, 3) which are flowed through in parallel open, **characterised in that** in the collecting pipe (4) and also in each of the parallel fluid paths (2, 3) a temperature sensor (5, 6, 7) is arranged respectively, so that from the temperatures measured by means of the temperature sensors (5, 6, 7) the proportion of the throughflow through at least one fluid path (2, 3) is calculated.

4. Heating system with a heat exchanger (1) according to claim 3, **characterised in that** the fluid paths (2, 3) flowed through in parallel are designed in the form of coaxial coils.

## Revendications

1. Procédé de surveillance de l'écoulement passant à travers un échangeur de chaleur (1), de préférence une installation de chauffage, comprenant au moins deux trajets de fluide (2, 3) parcourus parallèlement ainsi qu'une conduite collectrice (4), dans laquelle débouchent les au moins deux trajets de fluide parcourus parallèlement (2, 3), dans lequel est aménagé dans la conduite collectrice (4) un capteur de température, **caractérisé en ce que**, dans chacun des trajets de fluide parallèles (2, 3) est également aménagé respectivement un capteur de température (5, 6, 7) et la fraction de l'écoulement passant à travers au moins un trajet de fluide (2, 3) est calculée à partir des températures mesurées au moyen des capteurs de température (5, 6, 7).

2. Procédé de surveillance de l'écoulement passant selon la revendication 1, **caractérisé en ce qu'**une plage théorique pour la fraction d'écoulement des trajets de fluide est enregistrée et, dans le cas d'une fraction calculée qui se trouve dans aux limites de la plage théorique, un avertissement est délivré et/ou, dans le cas où l'on sort de la plage théorique, il se produit une mise hors service du dispositif dans lequel se trouve l'échangeur de chaleur (1).

3. Installation de chauffage comprenant un échangeur de chaleur (1) avec au moins deux trajets de fluide parcourus parallèlement (2, 3) ainsi qu'une conduite collectrice (4) dans laquelle débouchent les au moins deux trajets de fluide parcourus parallèlement (2, 3), dans laquelle est aménagé dans la conduite collectrice (4) un capteur de température, **caractérisée en ce qu'**un capteur de température (5, 6, 7) est respectivement aménagé dans la conduite collectrice (4) ainsi que dans chacun des trajets de fluide parallèles (2, 3) de manière à calculer la fraction de l'écoulement à travers au moins un trajet de fluide (2, 3) à partir des températures mesurées au moyen des capteurs de température (5, 6, 7).

4. Installation de chauffage comportant un échangeur de chaleur (1) selon la revendication 3, **caractérisée en ce que** les trajets de fluide parcourus parallèlement (2, 3) se présentent sous la forme d'hélices coaxiales.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006130929 A1